**Europäisches Patentamt**

(19) **European Patent Office**

**Office européen des brevets**

(11) Veröffentlichungsnummer: **0 046 941**
**B1**

(12) # EUROPÄISCHE PATENTSCHRIFT

(45) Veröffentlichungstag der Patentschrift:
**27.12.84**

(51) Int. Cl.³: **C 09 J 3/14, C 08 L 33/06**

(21) Anmeldenummer: **81106502.8**

(22) Anmeldetag: **21.08.81**

(54) **Thermoplastische Masse mit erhöhter Kohäsion und geringer Fliessneigung und Verfahren zu ihrer Herstellung.**

(30) Priorität: **30.08.80 DE 3032707**

(43) Veröffentlichungstag der Anmeldung:
**10.03.82 Patentblatt 82/10**

(45) Bekanntmachung des Hinweises auf die Patenterteilung:
**27.12.84 Patentblatt 84/52**

(84) Benannte Vertragsstaaten:
**AT BE CH DE FR GB IT LI**

(56) Entgegenhaltungen:
**EP - A - 0 026 907**
**DE - A - 2 058 665**
**DE - A - 2 337 558**
**DE - A - 2 416 991**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Sattelmeyer, Richard, Dr., Gabelsbornstrasse 32, D-6200 Wiesbaden (DE)**
Erfinder: **Schmelzer, Heinz, Schlossbergstrasse 15, D-6531 Rümmelsheim (DE)**
Erfinder: **Gutte, Richard, Heimchenweg 52, D-6230 Frankfurt am Main 80 (DE)**

## Beschreibung

Die Anwendung von thermoplastischen Massen auf der Basis von Acrylsäure- oder Methacrylsäureestern sowie gegebenenfalls weiteren einpolymerisierten Monomeren wie Styrol, olefinisch ungesättigten Nitrilen und/oder Amiden und anderen geeigneten Verbindungen zur Herstellung von Schmelzklebstoffen, Folien oder anderen thermoplastischen Massen wurde bereits mehrfach beschrieben. Als Nachteil derartiger Massen wird die geringe Scher- und Schälfestigkeit bei Beanspruchung unter erhöhten Temperaturen sowie der kalte Fluss bei Raumtemperatur angesehen.

Man hat deshalb versucht, durch Vernetzung von derartigen, Amidgruppen enthaltenden Copolymerisaten mit a) Formaldehyd oder Formaldehyd abspaltenden Verbindungen (z.B. DE-A 2 258 664) sowie mit Hilfe von b) Epoxidgruppen enthaltenden Verbindungen (DE-B2 227 348) Verbesserungen zu erzielen. Diese Vernetzungsverfahren sind jedoch schwierig durchzuführen, da die Vernetzungsmittel unter den erforderlichen Bedingungen nicht homogen in den thermoplastischen Massen verteilt werden können und die Genauigkeit bei der Dosierung der Vernetzungsmittel nur schwer einzuhalten ist, wodurch es leicht zu Unter- oder Übervernetzungen der Produkte kommt. Durch Untervernetzung wird aber die gewünschte Kohäsionssteigerung nicht erzielt, während durch Übervernetzung Gelbbildung eintritt und deshalb solche Massen nicht mehr verarbeitbar sind.

Zwar lassen sich auch acrylnitrilfreie Copolymerisate – der Gehalt an Acrylnitril ist neuerdings in Copolymerisaten aus toxikologischen Gründen unerwünscht – nach den geschilderten Verfahren zu vernetzten Produkten umsetzen; sie unterliegen aber hinsichtlich der Dosierung der Vernetzungsmittel den gleichen angeführten Schwierigkeiten.

Aus der DE-A 2 416 991 sind Lösungen druckempfindlicher Harze mit verbesserter Viskosität und gutem Fliessverhalten bekannt, die organische Lösungsmittel enthalten. Der Harzanteil besteht aus einem Copolymerisat aus 1) mindestens einem Monomeren, das eine Hydroxyl-, Carbonyl- oder enolisierbare Ketogruppe enthält, 2) mindestens einem Monomeren aus der Gruppe der Acryl- oder Methacrylester von Alkoholen mit 6 bis 20 C-Atomen und 3) gegebenenfalls einem Monomeren, das ein α-Olefin mit 2 bis 10 C-Atomen, Vinylester der Alkansäuren mit 3 bis 10 C-Atomen, Äthyl- und Methylester der Acryl- und Methacrylsäure, Acryl- und Methacrylnitril, Styrol und Vinylchlorid sein kann. Dieses Copolymerisat wird mit einem partiellen Chelatester eines Orthotitansäureester als vernetzend wirkender Substanz versetzt. Als Verbindung mit enolisierbarer Ketogruppe wird N,N-Diacetonyl(meth)acrylamid angeführt. Dieses substituierte ungesättigte Amid verleiht aufgrund seiner Konstitution dem Copolymerisat gänzlich andere Eigenschaften. Dosierungsschwierigkeiten treten hierbei jedoch nicht auf, da die Mischungen sich in Lösung befinden.

Auch aus der DE-A 2 337 558 sind druckempfindliche Klebstoffmischungen bekannt, die aus einem Mischpolymerisat aus mindestens einem Alkylacrylat mit bis zu etwa 18 Kohlenstoffatomen in der Acrylgruppe, einem Acrylmonomeren, das ein oder mehrere aktive Wasserstoffatome enthaltende Gruppen enthält und mindestens einen copolymerisierbaren Monomeren, die als einzige reaktionsfunktionelle Gruppe eine äthylenisch ungesättigte Bindung enthalten und einem chelatisierten Metallalkoxyd bestehen. Als Acryl-Monomeres, das reaktive Wasserstoffatome aufweisende Gruppen enthält, wird auch in dieser Entgegenhaltung ein substituiertes Acrylamid, das Diacetonylacrylamid genannt. Versuche haben ergeben, dass ein Klebstoff aus diesem Copolymerisat aber eine sehr geringe Wärmebelastbarkeit aufweist.

Die Aufgabe der vorliegenden Erfindung besteht daher in der Beseitigung der genannten Nachteile.

Gegenstand der Erfindung ist eine thermoplastische Masse mit erhöhter Kohäsion und geringer Fliessneigung bei normalen oder erhöhten Temperaturen auf Basis von

A) 90 bis 99,99, vorzugsweise 95–99,9 Gew.% mindestens eines Copolymerisates aus

a) 20 bis 95, vorzugsweise 40 bis 80 Gew.% mindestens eines Alkylesters von α,β-äthylenisch ungesättigten Mono- und/oder Dicarbonsäuren, die im Alkoholrest 1 bis 12 C-Atome enthalten,

b) 0,1 bis 20, vorzugsweise 0,5 bis 15 Gew.% mindestens eines am Stickstoff unsubstituierten Amids α,β-äthylenisch ungesättigter Mono- und/oder Dicarbonsäuren,

c) 0,1 bis 15, vorzugsweise 0,2 bis 10 Gew.% mindestens einer α,β-äthylenisch ungesättigten Mono und/oder Dicarbonsäure und

d) 0 bis 50, vorzugsweise 0 bis 30 Gew.% mindestens einer anderen α,β-äthylenisch ungesättigten copolymerisierbaren monomeren Verbindung,

B) 0,01 bis 10, vorzugsweise 0,1 bis 5 Gew.% mindestens einer vernetzend wirkenden Substanz, die eine Metallverbindung eines Acetessigsäurealkylesters mit 1 bis 6 C-Atomen in der Alkylgruppe oder eines zweiwertigen Alkohols mit 2 bis 6 C-Atomen ist, in der das Metallatom ein Element der zweiten, dritten oder vierten Gruppe des Periodischen Systems ist, wobei sich die Mengenverhältnisse aus A) und B) sowie aus a) bis d) zu jeweils 100% ergänzen müssen und gegebenenfalls

C) weiteren, als Streckmittel wirkenden sowie anderen üblichen Zusätzen.

Ein weiterer Gegenstand der Erfindung ist ein Verfahren zur Herstellung der thermoplastischen Massen.

Geeignete Carbonsäuren für die Komponenten a) bis c) des Copolymerisates A) sind z.B. Crotonsäure, Itakonsäure, Maleinsäure und/oder Fumarsäure, sowie vom Styrol abgeleitete, carboxylgruppenhaltige Monomere, vorzugsweise jedoch Acryl- und/oder Methacrylsäure.

Der Alkylrest in der Esterkomponente a) ist z.B. die Methyl-, Äthyl-, Propyl-, Butyl-, Hexyl-, 2-Äthylhexyl-, Decyl- und Dodecylgruppe sowie deren Isomere.

Als Amide b) werden die Mono- und/oder Diamide der genannten Säuren sowie die Monoamide der Monoester der vorgenannten ungesättigten Dicarbonsäuren mit 1–12 C-Atomen in der Alkylgruppe, z.B. den vorgenannten Alkylestern eingesetzt. Besonders vorteilhaft ist es, wenn als Komponente a) 2-Äthylhexylacrylat allein oder in Mischung mit Butylacrylat verwendet wird oder wenn in einem Gemisch mit anderen Estern ein überwiegender Anteil von über 50 Gew.% 2-Äthylhexylacrylat oder dessen Mischung mit Butylacrylat eingesetzt wird. In der genannten Mischung der beiden Ester kann der Anteil an Butylacrylat bis zu 70, vorzugsweise 10–50 Gew.% bezogen auf 100 Gew.% dieser Ester betragen. Unter Butylacrylat wird dabei das n-, sec-, tert.- oder iso-Butylacrylat verstanden, wobei n-Butylacrylat bevorzugt ist.

Geeignete Verbindungen d) sind z.B. Styrol, α-Methylstyrol, die verschiedenen Vinyltoluole, Äthylen, Vinylacetat und/oder Vinylchlorid.

In einer bevorzugten Ausführungsform der erfindungsgemässen thermoplastischen Massen wird als Copolymerisat A) ein Produkt verwendet, das aus a) 55 bis 65 Gew.% 2-Äthylhexylacrylat, 15 bis 30 Gew.% Butylacrylat und 3 bis 15 Gew.% Methylmethacrylat, b) 2 bis 10 Gew.% Acrylamid und c) 0,3 bis 5 Gew.% Acrylsäure aufgebaut ist.

Die Copolymerisate werden nach üblichen Herstellungsmethoden, wie Lösungs- oder Substanzpolymerisation, Block- oder Pfropfpolymerisation, in Gegenwart von Polymerisationsinitiatoren, eventuell unter Mitverwendung von Kettenreglern, erhalten. Die günstigsten Ergebnisse findet man, wenn die Copolymerisation in Gegenwart von Lösungsmitteln durchgeführt wird und anschliessend die Lösungsmittel durch Destillation bei erhöhter Temperatur, d.h. bis zu etwa 200°C, gegebenenfalls unter vermindertem Druck abgetrennt werden. Als Polymerisationskatalysatoren eignen sich vor allem Peroxide, wie Di-tert.-butylperoxid, Di-cumyl-peroxid, Cumolhydroperoxid, tert.-Butylhydroperoxid, tert.-Butylperbenzoat, tert.-Butylperoctoat, Dibenzoyl-peroxid, Methyläthylketonperoxid, jeweils einzeln oder im Gemisch, oder Azoisobuttersäuredinitril, in Mengen von 0,1–3, vorzugsweise 0,3–1 Gew.%, bezogen auf die Komponenten a)–d). Geeignete Lösungsmittel sind z.B. aromatische Kohlenwasserstoffe wie Toluol und Xylol und deren Mischungen mit gesättigten Kohlenwasserstoffen, wie Cyclohexan oder Benzinfraktionen, und/oder Alkohole z.B. die verschiedenen Butanole. Da einige Lösungsmittel, beispielsweise aromatische Kohlenwasserstoffe oder Alkohole kettenabbrechend wirken können, lässt sich durch die Auswahl des verwendeten Lösungsmittelgemisches das Molekulargewicht bzw. die Viskosität der Copolymerisate und damit der Haftschmelzkleber beeinflussen.

Die Copolymerisate besitzen meistens eine Schmelzviskosität, gemessen bei 180°C, von 5000 bis 100 000, vorzugsw. 10 000 bis 50 000 mPa.s. Sie besitzen eine hohe thermische Stabilität und können daher bei Temperaturen bis zu 200°C und über Zeiträume von bis zu 72 Stunden ohne grössere Veränderungen in der Viskosität, Farbe oder sonstigen Eigenschaften als Schmelze gehalten werden.

Das Metallatom in den vernetzend wirkenden Substanzen B) ist z.B. Zink, Magnesium, Bor oder Titan, vorzugsweise aber Aluminium. Die Mengenangaben von 0,01 bis 10 Gew.% (als 100%ige Substanz berechnet), beziehen sich auf 100 Gew.% der Komponenten A) und B).

Die Komponente C) wird im allgemeinen in Mengen von 1 bis 500, vorzugsweise 50 bis 250 Gewichtsteilen, bezogen auf 100 Gewichtsteile der Summe der Komponenten A) und B) eingesetzt, jedoch ist auch die Verwendung geringerer Mengen möglich.

Als Zusätze können enthalten sein z.B. natürliche Harze wie Balsam-, Wurzel-, Tall-, Kolophonium- und Kopalharze sowie davon abgeleitete modifizierte Harze. Die Modifizierung kann mit mehrwertigen Alkoholen, z.B. Glycerin, Pentaerythrit und Glykolen durch Veresterung oder durch Umsetzung mit äthylenisch ungesättigten Mono- und/oder Dicarbonsäuren, z.B. den obengenannten, erfolgen. Es können auch Copolymerisate von veresterten Naturharzen mit Styrol, den verschiedenen Vinyltoluolen oder Acryl- bzw. Methacrylsäure verwenden werden. Besonders vorteilhaft sind Terpenphenolharze sowie mit Phenolharzen modifizierte Kolophoniumharze.

Harze, die als Komponente C eingesetzt werden, sind im allgemeinen in einer Menge von 1–100, vorzugsweise 2–50 Gew.-Teilen, bezogen auf 100 Gew.-Teile der Summe der Komponenten A) und B) zugegen.

Weiterhin kommen synthetische Harze wie Kohlenwasserstoffharze, z.B. auf Basis von Dicyclopentadien, Cumaron, Inden oder die bei der petrochemischen Verarbeitung von Erdöl anfallenden $C_4$- bis $C_5$- bzw. $C_9$-Destillationsfraktionen in Betracht. Ebenfalls geeignet sind Harze auf der Basis von Ketonen wie Aceton, Methyläthylketon und Cyclohexanon, die durch Umsetzung dieser Verbindungen mit Formaldehyd erhalten werden.

Als weitere Zusätze C) kommen Weichmacher z.B. solche auf der Basis von Phthal-, Adipin-, Sebacin-, Acelain- und Phosphorsäureestern in Betracht, wobei der Alkoholrest 1–13 C-Atome beträgt. Ausserdem können die Phosphorsäureester mit Phenol bzw. Kresol verestert sein. Es können auch Weichmacher verwendet werden, die mit dem Copolymerisat A) mittels einer monofunktionellen reaktiven Gruppe reagieren, wie Glycidyläther oder langkettige Monoisocyanate, sowie Extender-Öle wie Mineralöl.

Als weitere Zusätze C) kommen ausserdem Wachse in Betracht wie Montanwachse oder synthetische Produkte auf der Basis von Olefinen, z.B. Polyäthylen- oder Polypropylenwachse sowie niedrigmolekulare Polymerisationsprodukte von Isobutylen, Butadien, Isopren, Styrol, Vinyläthern, deren Alkylrest 1 bis 8 Kohlenstoffatome enthält, Vinylestern, in denen der Fettsäurerest 1 bis 12 Kohlenstoffatome enthält, Vinylcyclohexan oder α-Methylstyrol. Bei gegebener Verträglichkeit sind auch thermoplastische Kautschuke, wie sie z.B. durch Blockcopolymerisation von Styrol, Butadien oder Styrol mit Isopren erhalten werden, als Zumischkomponenten geeignet.

Aus der Klasse der bituminösen Produkte bieten sich z.B. rohe, geblasene, oxydierte oder anderweitig modifizierte Bitumina an, die bei der Erdöl- oder Kohleaufbereitung gewonnen werden.

Als Zusatz C) kommen auch Füllstoffe in Betracht. z.B anorganische Produkte wie Bariumsulfat, Calciumkarbonat, Calciumsulfat, Magnesiumsilikat, Calcium-Magnesiumkarbonat, Aluminiumoxyd, Quarzmehl, kolloidale oder hochdisperse Kieselsäuren, die sämtlich allein oder in Gemischen eingesetzt werden können. Auch Pigmente können verwendet werden, sie müssen aber eine hohe Temperaturbeständigkeit aufweisen und sollen zweckmässig der Klasse der anorganischen Produkte oder hochstabilen organischen Verbindungen wie Phthalocyanin-Farbstoffe angehören. Auch verstärkend wirkende Faserstoffe können als Streckmittel mitverwendet werden, z.B. Asbest oder Glasfasern sowie auch synthetische Produkte wie Polyester- oder Polyamidfasern.

Bei dem Verfahren gemäss der Erfindung zur Herstellung der thermoplastischen Massen wird das Copolymerisat A) zusammen mit der Vernetzungskomponente B) und gegebenenfalls den weiteren Zusätzen C) in einem Mischaggregat z.B. bei 100 bis 150, vorzugsweise 125 bis 135°C behandelt, wobei eine Vernetzung des Copolymerisates eintritt. Der Mischvorgang wird abgebrochen, wenn eine bemerkbare Erhöhung der Kohäsion der Mischung eingetreten und keine wesentliche Steigerung mehr zu beobachten ist, was je nach der angewandten Temperatur im allgemeinen nach 1 bis 15 Min, und spezieller nach 5 bis 10 Min. der Fall ist.

Als Mischaggregate, die heizbar sind, werden Kneter oder Extruder eingesetzt, wobei zur besseren Dosierung und Durchmischung das Vernetzungsmittel zweckmässig in verdünnter Form, z.B. als Gemisch mit einer der zuzusetzenden Komponenten C) wie einem Harz, Weichmacher oder Wachs zugegeben wird.

Erfolgt die Zugabe der vernetzend wirkenden Substanzen zu den thermoplastischen Massen direkt in kleinen Portionen, kann die vollständige und homogene Verteilung längere Zeit in Anspruch nehmen. Dies kann zum Teil dadurch verursacht sein, dass ein mit einer funktionellen Gruppe bereits an ein Polymermolekül gebundenes Vernetzermolekül in seiner Bewegungsfähigkeit sterisch gehindert ist.

Deshalb empfiehlt sich zur Durchführung dieses Verfahrens in seiner bevorzugten Ausführungsform die Herstellung einer Kombination aus vernetzender Substanz und einem mit der thermoplastischen Masse gut verträglichen Kunstharz, wobei letzteres die Eigenschaften des Endproduktes nicht nachteilig beeinflussen darf. In jeglicher Hinsicht optimal verhalten sich Terpenphenolharze, die gut verträglich sind, bei niedriger Temperatur schmelzen (unterhalb 100°C) und durch den Phenolgehalt oxydationsstabilisierend wirken. Eine Kombination aus vernetzender Substanz und Terpenphenolharz ist unter den verfahrensgemässen Bedingungen in der thermoplastischen Schmelze gut einmischbar, da ein solches Vernetzungsmittel bei einer Temperatur von über 120°C dünnflüssig ist.

Derartige Vernetzungsmittel aus vernetzend wirkender Substanz B) und Harz C) werden vorzugsweise durch Zusammenschmelzen beider Komponenten im Verhältnis Vernetzersubstanz: Harz wie 0,5:99,5 bis 50:50 Gewichtsteile, bevorzugt 5:95 bis 30:70 bei 100 bis 120°C hergestellt. Nach Bildung einer homogenen Schmelze und Abkühlen wird das Vernetzungsmittel zu einem feinen Pulver zerkleinert und in dieser Form der thermoplastischen Schmelze im Kneter zugegeben.

Eine alternative Arbeitsweise besteht im intensiven Mischen der zu feinen Pulvern zerkleinerten Komponenten der vernetzend wirkenden Substand B) bzw. dem Harz C) in den angeführten Mengenverhältnissen und Zugabe dieses aus einem Pulvergemisch bestehenden Vernetzungsmittels zu der thermoplastischen Schmelze im Kneter. In diesem Falle wird durch Aufschmelzen der Harzteilchen in der Nähe der Vernetzerpartikel eine homogene Verteilung im Thermoplasten bewirkt.

Die erfindungsgemässen thermoplastischen Massen kommen zur Anwendung als Schmelz- und Schmelzhaftklebstoffe, Kaschierklebstoffe, siegelfähige Beschichtungen, sonstige Klebe- oder Sperrschichten, Folien und Bahnen, z.B. zur Isolation im Tief- oder Hochbau an Fundamenten, Dächern, Kuppeln oder Falzen sowie als Bänder oder Raupen in Fugen oder Stössen. Weiterhin können solche Massen als Schutzschicht auf Metallen durch direkten Auftrag oder durch Anbringen in Form von Folien Verwendung finden. Ausser der Wärmebelastbarkeit ist bei dieser Anwendung die Korrosionsschutzwirkung von grossem Vorteil sowie ein überraschend günstiges akustisches Dämpfungsverhalten.

In den folgenden Beispielen bedeutet T Gewichtsteile und % Gew.%, sofern nicht anders angegeben.

Beispiele

1. a) Herstellung des Copolymerisates

Ein Gemisch aus 1 T Acrylsäure, 6 T Acrylamid, 9 T Methylmethacrylat, 60 T 2-Äthylhexylacrylat und 23 T Butylacrylat wird in einer Mischung aus Toluol, Cyclohexan und Isobutanol unter Einsatz von 0,5 T Di-tert.-Butylperoxid bei 100 bis 130°C copolymerisiert. Das Lösungsmittelgemisch wird durch Destillation, zuletzt bei 180 bis 190°C unter vermindertem Druck (über 50 mbar) entfernt. Die Polymerisatausbeute beträgt mehr als 99%. Das erhaltene Endprodukt hat eine Schmelzviskosität von 45 000 mPa.s. bei 180°C. Die Glasübergangstemperatur beträgt −45°C.

b) Das Copolymerisat 1a wird in einen heizbaren Kneter gegeben und bei 130°C innerhalb 20 Min. In eine Schmelze übergeführt. Auf 100 T des Copolymerisats werden 5,5 Teines Vernetzungsmittel gegeben, das aus 0,5 T Aluminium-Acetessigsäureäthylester (70%ig gelöst in Isobutanol) und 5 T Terpenphenolharz durch Verdampfen des Lösungsmittels, homogenes Schmelzen, Abkühlen und Pulverisieren hergestellt wurde. Nach 5 bis 10 Min. Behandlungszeit bei 130°C im Kneter wird das vernetzte Copolymerisat entnommen und für die weitere Prüfung bereitgestellt.

2. Beispiel 1 wird wiederholt, jedoch wird anstelle des dort genannten Vernetzungsmittels ein Aluminium-Butandiolat verwendet, das durch Umsetzung von in Isobutanol gelöstem Aluminiumacetessigsäureäthylester mit Butandiol-1,4 und Aufarbeitung zum Festprodukt erhältlich ist. Das Aluminium-Butandiolat-1,4 wird zusammen mit einem Terpenphenolharz im Verhältnis 1:10 geschmolzen und nach dem Abkühlen pulverisiert.

3. Beispiel 2 wird wiederholt, jedoch mit dem Unterschied, dass Aluminium-Butandiolat-1,4 ohne Zusatz eines Terpenphenolharzes direkt der auf 130°C im Kneter temperierten Schmelze des Copolymerisates 1a zugegeben wird.

Vergleichsbeispiel 1: Zu 100 T Copolymerisat 1a wird unter den Versuchsbedingungen des Beispiels 1 ein pulverisiertes Vernetzungsmittel aus 5 T Terpenphenolharz und 1 T Epoxydharz (Epoxyd-Äquivalentgewicht 450–525) gegeben und nach 5 bis 10 Min. Behandlungszeit bei 130°C dem Kneter entnommen.

Vergleichsbeispiel 2: Zu 100 T Copolymerisat 1a werden nach dem Aufschmelzen im Kneter portionsweise 0,04 T Paraformaldehyd zugesetzt. Trotz langsamer und vorsichtiger Zugabe entsteht ein inhomogenes Produkt mit Anteilen von Gelteilchen, das für die weiteren Prüfungen nicht geeignet ist und verworfen wird.

Die aus den Beispielen 1–3 und dem Vergleichsbeispiel 1 gewonnenen vernetzten Copolymerisate werden neben dem unvernetzten Copolymerisat 1a (Vergleichsbeispiel 3) folgenden Prüfungen unterzogen:

Aus den Copolymerisaten wird eine Folie von jeweils 1 mm Dicke hergestellt und daraus die Prüflinge angefertigt.

a) Zeitstandversuch
Der Prüfling von einer Fläche von 15×15 mm wird mit einer Seite auf ein Stahlblech (Breite 15 mm) aufgebracht und die andere Seite mit einem überlappenden Filmstreifen aus Polyäthylenterephthalatfolie beklebt. Der Prüfling wird senkrecht aufgehängt und an der überlappten Polyäthylenterephthalatfolie mit einem Gewicht von 1 kg beschwert und damit einer Scherbeanspruchung unterwofen. Die Prüfung wird bei 23°C und 50% relativer Luftfeuchtigkeit durchgeführt. Gemessen wird die Zeit bis zum Herabfallen der Polyäthylenterephthalatfolie mit dem Balastungsgewicht.

b) Wärmeverformungsprüfung
Prüflinge aus den Folien mit einer Fläche von jeweils 30:25 mm (Länge × Breite) werden auf ein 20:20 cm grosses Stahlblech in einer waagerechten Reihe mit einem Abstand von 15 cm zur unteren Kante des Bleches nebeneinander aufgeklebt. Das mit den Prüflingen versehene Stahlblech wird in einem Winkel von 100° in eine auf 120°C erhitzte Kammer gestellt und die Proben für 60 Min. bei dieser Temperatur belassen. Nach dieser Zeit wird die Weglänge gemessen, die die Unterkanten der Proben abwärts geflossen sind.

c) Filmfestigkeit und Dehnung
Prüflinge von einer Länge von 100 mm und 15 mm Breite werden in einer Prüfmaschine zur Messung der Reissfestigkeit und Reissdehnung bis zum Materialbruch belastet. Damit kann die maximale Filmfestigkeit und die Bruchdehnung ermittelt werden.

Die erhaltenen Werte sind in der folgenden Tabelle aufgeführt.

Tabelle

| Beispiele | 1 | 2 | 3 | Vergleich 1 | Vergleich 2 | Vergleich 3 |
|---|---|---|---|---|---|---|
| a) Zeitstandversuch (h) | 8 | 2½ | 8 | 2 | verworfen, inhomogen | 3 |
| b) Wärmeverformungsprüfung/- Fliessstrecke in cm | 0 | 0 | 0 | 10 | – | über 12* |
| c) Filmfestigkeit (N) | 13 | 16 | 9 | 3 | – | 8 |
| Dehnung (cm) | 35 | 48 | 48 | 65 | – | 100 |

* bereits nach 40 Min.

Wie aus der Tabelle zu ersehen ist, unterliegen die vernetzten Produkte gemäss der Erfindung keiner Fliessverformung bei 120°C im Vergleich zu einem sehr starken Fliessen des unvernetzten Copolymerisats (Vergleich 3) und der Epoxydharzvernetzung. Ausserdem haben die erfindungsgemässen vernetzten Produkte eine höhere Filmfestigkeit und, durch die innere Festigkeit bedingt, eine niedrigere Bruchdehnung als die beiden Vergleichsbeispiele 1 und 3. Die höhere innere Festigkeit der erfindungsgemässen Beispiele 1 bis 3 macht sich ausserdem deutlich bemerkbar in den längeren Prüfzeiten beim Zeitstandversuch im Vergleich zu den Vergleichsbeispielen.

**Patentansprüche**

1. Thermoplastische Masse mit erhöhter Kohäsion und geringer Fliessneigung auf Basis eines Copolymerisates äthylenisch ungesättigter Monomeren und eines chelatisierenden Mittels dadurch gekennzeichnet, dass sie aus

A) 90 bis 99,99 Gew.% mindestens eines Copolymerisats aus
a) 20 bis 95 Gew.% mindestens eines Alkylesters von α,β-äthylenisch ungesättigten Mono- und/oder Dicarbonsäuren, die im Alkoholrest 1 bis 12 C-Atome enthalten,
b) 0,1 bis 20 Gew.% mindestens am Stickstoff unsubstituierten Amids α,β-äthylenisch ungesättigter Mono-und/oder Dicarbonsäuren,
c) 0,1 bis 15 Gew.% mindestens einer α,β-äthylenisch ungesättigten Mono- und/oder Dicarbonsäure und
d) 0 bis 50 Gew.% mindestens einer anderen α,β-äthylenisch ungesättigten copolymerisierbaren monomeren Verbindung,
B) 0,01 bis 10 Gew.% mindestens einer vernetzend wirkenden Substanz, die eine Metallverbindung eines Acetessigsäurealkylesters mit 1 bis 6 C-Atomen in der Alkylgruppe oder eines zweiwertigen Alkohols mit 2 bis 6 C-Atomen ist, wobei das Metallatom ein Element der zweiten, dritten oder vierten Gruppe des periodischen Systems ist, wobei sich die Mengenverhältnisse aus A) und B) sowie aus a) bis d) zu jeweils 100% ergänzen müssen, für sich oder mit
C) weiteren, als Streckmittel wirkenden sowie anderen üblichen Zusätzen besteht.
2. Thermormoplastische Masse nach Anspruch 1, dadurch gekennzeichnet, dass sie aus
A) 95 bis 99,9 Gew.% mindestens eines Copolymerisates aus
a) 40 bis 80 Gew.% mindestens eines ungesättigten Esters, vorzugsweise einem Gemisch aus n-Butyl- und 2-Äthylhexylacrylat allein oder zusammen mit weniger als 50 Gew.% an anderen Ester,
b) 0,5 bis 15 Gew.% mindestens eines am Stickstoff unsubstituierten Amids α,β-äthylenisch ungesättigter Mono- und/oder Dicarbonsäuren,
c) 0,2 bis 10 Gew.% mindestens einer α,β-äthylenisch ungesättigten Mono- und/oder Dicarbonsäure und
d) 0 bis 30 Gew.% mindestens einer anderen α,β-äthylenisch ungesättigten copolymerisierbaren monomeren Verbindung,

B) 0,1 bis 5 Gew.% mindestens einer vernetzend wirkenden Substanz, wobei sich die Mengenverhältnisse aus A) und B) sowie aus a) bis d) zu jeweils 100% ergänzen müssen, für sich oder mit
C) weiteren, als Streckmittel wirkenden sowie anderen üblichen Zusätzen besteht, wobei die Komponente C) vorzugsweise ein Terpenphenolharz und/oder ein mit Phenolharzen modifiziertes Kolophoniumharz ist.

3. Thermoplastische Masse nach Anspruch 1 oder 2, dadurch gekennzeichnet, dass die Komponente A) aus
a) 55 bis 65 Gew.% 2-Äthylhexylacrylat, 15 bis 30 Gew.% Butylacrylat und 3 bis 15 Gew.% Methylmethacrylat,
b) 2 bis 10 Gew.% Acrylamid und
c) 0,3 bis 5 Gew.% Acrylsäure besteht.
4. Thermoplastische Masse nach einem oder mehreren der Ansprüche 1 bis 3, dadurch gekennzeichnet, dass das Copolymerisat A) eine Schmelzviskosität von 5000 bis 100 000 mPa.s bei 180°C besitzt.
5. Thermoplastische Masse nach einem oder mehreren der Ansprüche 1 bis 4, dadurch gekennzeichnet, dass die Komponente C) in Mengen von 1–500 Gew.-Teile, vorzugsweise von 50–250 Gew.-Teilen, bezogen auf 100 Gew.-Teile der Summe der Komponenten A) und B) vorliegt, wobei der Anteil an Harzen 1–100, vorzugsweise 2–50 Gew.-Teile beträgt.
6. Verfahren zur Herstellung der thermoplastischen Masse nach einem oder mehreren der Ansprüche 1 bis 5, dadurch gekennzeichnet, dass das Copolymerisat A) zusammen mit der Vernetzungskomponente B) und gegebenenfalls weiteren Zusätzen C) in einem Mischaggregt bei 100 bis 150°C behandelt und vernetzt wird.
7. Verfahren nach Anspruch 6, dadurch gekennzeichnet, dass die Temperatur 125 bis 135°C und die Behandlungsdauer 1 bis 15, vorzugsweise 5 bis 10 Min. beträgt.
8. Verfahren zur Herstellung der thermoplastischen Massen gemäss Anspruch 6 oder 7, dadurch gekennzeichnet, dass eine feinpulvrige Mischung der Komponenten B) und C) zu der thermoplastischen Schmelze im Mischaggregat zugeführt wird.
9. Ausführungsform nach einem oder mehreren der Ansprüche 1 bis 8, dadurch gekennzeichnet, dass die vernetzend wirkende Substanz B) im Gewichtsverhältnis 0,5:99,5 bis 50:50, vorzugsweise 5:95 bis 30:70 mit einem Kunstharz C) verschmolzen wird.
10) Verwendung der thermoplastischen Masse nach einem oder mehreren der Ansprüche 1 bis 5 als Schmelz- und Schmelzhaftklebstoffe, Kaschierklebstoffe, siegelfähige Beschichtungen, Klebe- oder Sperrschichten.

**Revendications**

1. Matière thermoplastique à cohésion élevée et à faible tendance au fluage, à base d'un copolymère de monomères à insaturation éthylénique et d'un produit chélaté, caractérisée en ce qu'elle est constituée

A) de 90 à 99,99% en poids d'au moins un copolymère,
  a) de 20 à 95% en poids d'au moins un ester alkylique d'un acide mono- et/ou dicarboxylique à insaturation α,β-éthylénique ayant dans le résidu alcool 1 à 12 atomes de carbone,
  b) de 0,1 à 20% en poids d'au moins un amide, nonsubstitué sur l'atome d'azote, d'acides mono- et/ou dicarboxyliques à insaturation α,β-éthylénique,
  c) de 0,1 à 15% en poids d'au moins un acide mono- et/ou dicarboxylique à insaturation α,β-éthylénique, et
  d) de 0 à 50% en poids d'au moins un autre composé monomère copolymérisable à insaturation α,β-éthylénique,
B) de 0,01 à 10% en poids d'au moins une substance à effet réticulant, qui soit un composé métallique d'un ester alkylique de l'acide acétylacétique à 1 à 6 atomes de carbone dans le groupe alkyle, ou d'un bialcool à 2 à 6 atomes de carbone, l'atome métallique étant un élément du deuxième, troisième ou quatrième groupe du tableau périodique, les rapports pondéraux de A) et B) d'une part, ainsi que de a) à d) d'autre part, devant dans chaque cas faire un total de 100%, isolément ou avec
C) d'autres additifs à effet étendeur ainsi que d'autres additifs courants.

2. Matière thermoplastique selon la revendication 1, caractérisée en ce qu'elle est constituée
A) de 95 à 99,9% en poids d'au moins un copolymère
  a) de 40 à 80% en poids d'au moins un ester insaturé, de préférence un mélange d'acrylate de n-butyle et d'éthyl-2 hexyle, seul ou en même temps que moins de 50% en poids d'autres esters,
  b) de 0,5 à 15% en poids d'au moins un amide non-substitué sur l'azote, d'acides mono- et/ou dicarboxyliques à insaturation α,β-éthylénique,
  c) de 0,2 à 10% en poids d'au moins un acide mono- et/ou dicarboxylique à insaturation α,β-éthylénique, et
  d) de 0 à 30% en poids d'au moins un autre composé monomère copolymérisable à insaturation α,β-éthylénique,
B) de 0,1 à 5% en poids d'au moins une substance à effet réticulant, les rapports pondéraux de A) et de B) d'une part, ainsi que de a) à d) d'autre part, devant dans chaque cas faire un total de 100%, seul ou avec
C) d'autres additifs, à effet étendeur, ainsi que d'autres additifs courants, le composant C) étant de préférence une résine de terpènephénol et/ou une résine de colophane modifiée par des résines phénoliques.

3. Matière thermoplastique selon l'une quelconque des revendications 1 ou 2, caractérisée en ce que le composant A) est constitué
  a) de 55 à 65% en poids d'acrylate d'éthyl-2 hexyle, 15 à 30% en poids d'acrylate de butyle et 3 à 15% en poids de méthacrylate de méthyle,
  b) de 2 à 10% en poids d'acrylamide et
  c) de 0,3 à 5% en poids d'acide acrylique.

4. Matière thermoplastique selon l'une quelconque des revendications 1 à 3, caractérisée en ce que le copolymère A) présente à 180°C une viscosité à l'état fondu de 5000 à 100 000 mPa.s.

5. Matière thermoplastique selon l'une quelconque des revendications 1 à 4, caractérisée en ce que le composant C) est présent en des quantités de 1 à 500 parties en poids, de préférence de 50 à 250 parties en poids sur la base de 100 parties en poids du total des composants A) et B), la part des résines étant de 1 à 100, de préférence 2 à 50 parties en poids.

6. Procédé de préparation de la matière thermoplastique selon l'une quelconque des revendications 1 à 5, caractérisé en ce que le copolymère A) est traité dans un groupe mélangeur à 100 à 150°C, et réticulé, en même temps que le composant de réticulation B) et éventuellement d'autres additifs C).

7. Procédé selon la revendication 6, caractérisé en ce que la température est de 125 à 135°C et que la durée du traitement est de 1 à 15, de préférence 5 à 10 minutes.

8. Procédé de préparation des matières thermoplastiques selon l'une quelconque des revendications 6 ou 7, caractérisé en ce qu'on introduit dans la masse fondue thermoplatique se trouvant dans le groupe mélangeur un mélange finement pulvérisé des composants B) et C).

9. Forme de réalisation selon l'une quelconque des revendications 1 à 8, caractérisée en ce que la substance à effet réticulant B) est fondue avec une résine synthétique C) selon un rapport pondéral de 0,5:99,5 à 50:50, de préférence de 5:95 à 30:70.

10. Utilisation de la matière thermoplastique selon l'une quelconque des revendications 1 à 5 en tant qu'adhésif fusible ou adhésif fusible de contact, adhésif de contrecollage, revêtement thermoscellable, couches adhésives ou de blocage.

**Claims**

1. Thermoplastic composition having high cohesion and reduced tendency to flow, based on a copolymer of ethylenically unsaturated monomers and a chelating agent, characterised in that it consists of

A) 90 to 99.99 wt.% of at least one copolymer of
  a) 20 to 95 wt.% of at least one alkyl ester of an α,β-ethylenically unsaturated mono- and/or dicarboxylic acid which contains 1 to 12 carbon atoms in the alcohol group,
  b) 0.1 to 20 wt.% of at least one amide, unsubstituted at the nitrogen atom, of α,β-ethylenically unsaturated mono- and/of dicarboxylic acids,

c) 0.1 to 15 wt.% of at least one $\alpha,\beta$-ethylenically unsaturated mono- and/or dicarboxylic acid, and
d) 0 to 50 wt.% of at least one other $\alpha,\beta$-ethylenically unsaturated copolymerisable monomeric compound,

B) 0.01 to 10 wt.% of at least one cross-linking agent, which is a metal compound of an alkyl acetonacetate with 1 to 6 carbon atoms in the alkyl grup or a metal compound of a dihydric alcohol with 2 to 6 carbon atoms, the metal atom being an element of the second, third or fourth group of the Periodic Table, wherein the proportions of A) and B) and of a) to d) must add up to 100%, per se or with

C) other additives acting as diluents and other conventional additives.

2. Thermoplastic composition as claimed in claim 1, characterised in that it consists of

A) 95 to 99.9 wt.% of at least one copolymer of
   a) 40 to 80 wt.% of at least one unsaturated ester, preferably a mixture of n-butyl and 2-ethylhexyl acrylate, either alone or together with less than 50 wt.% of other esters,
   b) 0.5 to 15 wt.% of at last one amide, unsubstituted at the nitrogen atom, of $\alpha,\beta$-ethylenically unsaturated mono- and/or dicarboxylic acids,
   c) 0.2 to 10 wt.% of at least one $\alpha,\beta$-ethylenically unsaturated mono- and/or dicarboxylic acid and
   d) 0 to 30 wt.% of at least one other $\alpha,\beta$-ethylenically unsaturated copolymerisable monomeric compound,

B) 0.1 to 5 wt.% of at least one cross-linking agent, whilst the proportions of A) and B) and of a) to d) must add up to 100%, per se or optionally together with

C) other additives acting as diluents and other conventional additives, component C) preferably being a terpenephenol resin and/or a colophony resin modified with phenolic resins.

3. Thermoplastic composition according to claim 1 or 2, characterised in that component

A) consists of
   a) 55 to 65 wt.% of 2-ethylhexyl acrylate, 15 to 30 wt.% of butyl acrylate and 3 to 15 wt.% of methyl methacrylate,
   b) 2 to 10 wt.% of acrylamide and
   c) 0.3 to 5 wt.% of acrylic acid.

4. Thermoplastic composition according to one or more of the claims 1 to 3, characterised in that copolymer A) has a melting viscosity of 5,000 to 100,000 mPa.s at 180°C.

5. Thermoplastic composition according to one or more of the claims 1 to 4, characterised in that component C) is present in an amount of 1 to 400 parts by weight, preferably 50 to 250 parts by weight, based on 100 parts by weight of the sum of components A) and B), the proportion of resins being 1 to 100, preferably 2 to 50 parts by weight.

6. Process for the preparation of the thermoplastic composition according to one or more of the claims 1 to 5, characterised in that copolymer A), together with cross-linking component B) and optionally other additives C), is treated and cross-linked in a mixing apparatus at 100 to 150°C.

7. Process according to claim 6, characterised in that the temperature is 125 to 135°C and the treatment time is 1 to 15, preferably 5 to 10 minutes.

8. Process for the preparation of the thermoplastic compositions according to claim 6 or 7, characterised in that a finely powdered mixture of components B) and C) is fed into the thermoplastic melt in the mixing apparatus.

9. Embodiment according to one or more of the claims 1 to 8, characterised in that the cross-linking agent B) is melted with a synthetic resin C) in the weight ratio 0.5:99.5 to 50:50, preferably 5:95 to 30:70.

10. Use of the thermoplastic composition according to one or more of the claims 1 to 5 as thermoplastic and hot-melt adhesives, laminating adhesives, sealable coatings, adhesive or barrier layers.